(19) Europäisches Patentamt
European Patent Office
Office européen des brevets

(11) **EP 2 161 771 A1**

(12) **EUROPEAN PATENT APPLICATION**
published in accordance with Art. 153(4) EPC

(43) Date of publication:
**10.03.2010 Bulletin 2010/10**

(21) Application number: **08765605.4**

(22) Date of filing: **13.06.2008**

(51) Int Cl.:
***H01M 8/02*** *(2006.01)* ***H01M 4/86*** *(2006.01)*
***H01M 4/88*** *(2006.01)* ***H01M 8/10*** *(2006.01)*

(86) International application number:
**PCT/JP2008/060895**

(87) International publication number:
**WO 2008/153146 (18.12.2008 Gazette 2008/51)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.06.2007 JP 2007159423**

(71) Applicant: **Sumitomo Chemical Company, Limited**
**Tokyo 104-8260 (JP)**

(72) Inventors:
- **KURITA, Hiroyuki**
**Tsukuba-shi**
**Ibaraki 305-0045 (JP)**
- **SHINODA, Hiroshi**
**Niihama-shi**
**Ehime 792-0002 (JP)**
- **SAITO, Shin**
**Tsukuba-shi**
**Ibaraki 305-0822 (JP)**
- **KURODA, Ryuma**
**Komatsu-shi**
**Ishikawa 932-0832 (JP)**

(74) Representative: **Vossius & Partner**
**Siebertstraße 4**
**81675 München (DE)**

(54) **MEMBRANE-ELECTRODE ASSEMBLY, METHOD FOR PRODUCTION THEREOF, AND SOLID POLYMER FUEL CELL**

(57) A membrane-electrode assembly for a solid polymer fuel cell, which comprises a mutually opposing anode catalyst layer and cathode catalyst layer with a polymer electrolyte membrane formed between the anode catalyst layer and cathode catalyst layer, wherein the anode catalyst layer and cathode catalyst layer each contain a catalyst and a hydrocarbon-based polymer electrolyte with an ion-exchange group. If the ion-exchange group density of the anode catalyst layer is represented as $\alpha$ [$\mu$eq/cm$^2$] and the ion-exchange group density of the cathode catalyst layer is represented as $\beta$ [$\mu$eq/cm$^2$], then $\alpha$ and $\beta$ satisfy the following relational expressions (1), (2) and (3).

$$\beta/\alpha > 1.0 \quad \ldots (1)$$

$$\alpha < 0.45 \quad \ldots (2)$$

$$\beta < 0.85 \quad \ldots (3)$$

*Fig.1*

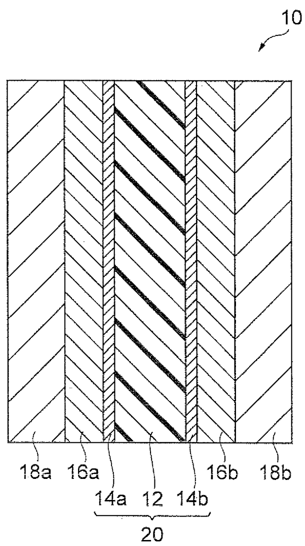


EP 2 161 771 A1

## Description

### Technical Field

The present invention relates to a membrane-electrode assembly and a method for production thereof, and to a solid polymer fuel cell.

### Background Art

Depletion of petroleum resources is currently a serious problem, while consumption of fossil fuels is also exacerbating environmental problems such as air pollution and global warming. Because of this situation, fuel cells have become an object of interest as clean electric power sources that do not emit carbon dioxide, and with their increasing development, some have begun to come into practical use.

Solid polymer fuel cells comprising polymer electrolyte membranes are employed with advantages because such fuel cells mounted in automobiles and the like can more easily produce high voltage and high current. A solid polymer fuel cell generally comprises a membrane-electrode assembly (hereinafter also referred to as "MEA") constructed with a pair of electrode catalyst layers and an ion-conducting polymer electrolyte membrane sandwiched between the pair of electrode catalyst layers. Electrode catalyst layers are known which have a catalyst-supported material comprising a catalyst substance such as platinum supported on carbon black or the like, bonded by a proton conducting polymer electrolyte. A gas diffusion layer is laminated on each electrode catalyst layer to construct a solid polymer fuel cell. Separators that also serve as gas channels are also sometimes laminated on each electrode catalyst layer.

Fluorine-based polymer electrolytes such as Nafion (registered trademark of DuPont Corp.) have been the major materials investigated in the past for polymer electrolyte membrane components of MEAs and proton-conductive polymer electrolytes to be used in electrode catalyst layers. However, fluorine-based polymer electrolytes are associated with problems because they discharge fluorine ions and therefore place a burden on the environment, while they are also very expensive and have low heat resistance.

In light of these circumstances, polymer electrolytes that are inexpensive and have excellent properties and can substitute for fluorine-based polymer electrolytes have been actively developed in recent years, and particular focus has been on hydrocarbon-based polymer electrolytes which are polymer electrolytes without fluorine atoms as constituent components. Because hydrocarbon-based polymer electrolyte membranes are superior to fluorine-based polymer electrolyte membranes in that they can be inexpensively produced, they have high heat resistance to withstand operation at high temperature and they can be easily recycled, they have been studied as polymer electrolyte membranes for application in MEAs. There also exist, in recent years, MEAs that further employ hydrocarbon-based polymer electrolytes for the ion-conducting polymer electrolyte used in each electrode catalyst layer (also referred to hereinafter as "catalyst layer"), to make use of the recycling properties of hydrocarbon-based polymer electrolytes. Patent document 1, for example, proposes a method of controlling the ratio of the weight of catalyst particles and polymer ion-exchange components in each electrode catalyst layer to within prescribed ranges, in order to prevent lowering of the electric power generation properties due to moisture discharge and gas leakage during operation.

[Patent document 1] Japanese Patent Publication No. 3689322

### Disclosure of the Invention

Problems to be Solved by the Invention

However, MEAs employing hydrocarbon-based polymer electrolytes in both the polymer electrolyte membrane and electrode catalyst layer are in need of further improvement at least because of their low electric power generation properties compared to conventional MEAs employing a fluorine-based polymer electrolyte as the ion-conducting polymer electrolyte for the electrode catalyst layer.

It is therefore an object of the present invention to achieve further improvement in the electric power generation properties of solid polymer fuel cells employing hydrocarbon-based polymer electrolytes.

Means for Solving the Problems

As a result of much diligent research directed toward solving the problems described above, the present inventors have found that for an MEA employing a hydrocarbon-based polymer electrolyte as the ion-conducting polymer electrolyte in each electrode catalyst layer, it is possible to improve the electric power generation properties of the fuel cell if the ion-exchange group densities are different in the anode catalyst layer and the cathode catalyst layer, and upon still further research based on this finding, the present inventors have completed this invention.

That is, according to one aspect, the invention relates to a membrane-electrode assembly (MEA) comprising an anode catalyst layer and cathode catalyst layer placed opposite each other, and a polymer electrolyte membrane formed between the anode catalyst layer and cathode catalyst layer. In an MEA according to the invention, the polymer electrolyte membrane contains a hydrocarbon-based polymer electrolyte with an ion-exchange group, and the anode catalyst layer and cathode catalyst layer each contain a catalyst and a hydrocarbon-based polymer electrolyte with an ion-exchange group. If the ion-exchange group density of the anode catalyst layer is represented as $\alpha$ [$\mu$eq/cm$^2$] and the ion-exchange group density of the cathode catalyst layer is represented as $\beta$ [$\mu$eq/cm$^2$], then $\alpha$ and $\beta$ satisfy the following relational expressions (1), (2) and (3).

$$\beta/\alpha > 1.0 \ldots (1)$$

$$\alpha < 0.45 \quad \ldots (2)$$

$$\beta < 0.85 \quad \ldots (3)$$

In this MEA, the hydrocarbon-based polymer electrolyte in the polymer electrolyte membrane is preferably a block copolymer comprising a first block composed of a repeating unit with an ion-exchange group, and a second block composed essentially of a repeating unit with no ion-exchange group. This can result in an even more notable effect of improved electric power generation properties.

According to another aspect, the invention relates to a method for production of a membrane-electrode assembly according to the invention as described above. The production method according to the invention comprises a step of forming an anode catalyst layer and/or cathode catalyst layer using catalyst ink containing a solvent selected from among water and hydrophilic solvents, a catalyst substance and a hydrocarbon-based polymer electrolyte, wherein at least a portion of the hydrocarbon-based polymer electrolyte is dispersed in the solvent. In this case, the catalyst ink is preferably coated onto the polymer electrolyte membrane and the solvent is removed from the coated catalyst ink to form the catalyst layer.

According to this method it is possible to obtain a membrane-electrode assembly with more excellent electric power generation properties, wherein the polymer electrolyte membrane is more resistant to partial dissolution during formation of the catalyst layer, compared to using a homogeneous solution. The catalyst ink is also preferably coated directly onto the polymer electrolyte membrane by spraying. A catalyst layer obtained by spraying will be anchored in a more closely bonded state with the polymer electrolyte membrane, so that the electric power generation properties can be further improved.

According to yet another aspect, the invention relates to a solid polymer fuel cell comprising a membrane-electrode assembly of the invention as described above. The solid polymer fuel cell of the invention can exhibit sufficiently excellent electric power generation properties while using a hydrocarbon-based polymer electrolyte.

**Effect of the Invention**

According to the invention it is possible to achieve further improvement in the electric power generation properties with membrane-electrode assemblies (MEAs) employing hydrocarbon-based polymer electrolytes, and solid polymer fuel cells comprising the MEAs.

Furthermore, the use of hydrocarbon-based polymer electrolytes has the advantage of lowering cost and increasing heat resistance, in addition to eliminating the problem of fluorine ion discharge associated with using common fluorine-based polymer electrolytes.

**Brier Description of Drawings**

Fig. 1 is a cross-sectional view showing an embodiment of a fuel cell.

Explanation of Symbols

10: Fuel cell, 12: polymer electrolyte membrane, 14a: anode catalyst layer, 14b: cathode catalyst layer, 16a, 16b: gas diffusion layers, 18a, 18b: separators, 20: membrane-electrode assembly (MEA).

## Best Mode for Carrying Out the Invention

Preferred embodiments of the invention will now be described in detail. However, the present invention is not limited to the embodiments described below.

Fig. 1 is a cross-sectional view showing an embodiment of a fuel cell. The fuel cell 10 shown in Fig. 1 is a solid polymer fuel cell comprising a polymer electrolyte membrane 12, and a membrane-electrode assembly (MEA) 20 constructed from a mutually opposing anode catalyst layer 14a and cathode catalyst layer 14b sandwiching a polymer electrolyte membrane 12. The fuel cell 10 further comprises a gas diffusion layer 16a and separator 18a formed in that order from the inner side of the anode catalyst layer 14a side, and a gas diffusion layer 16b and separator 18b formed in that order from the inner side of the cathode catalyst layer 14b.

When the fuel is hydrogen gas, proton ($H^+$) and electrons are produced from hydrogen supplied to the anode catalyst layer 14a, and the protons that are produced migrate through the polymer electrolyte membrane 12 to the cathode catalyst layer 14b, resulting in production of water from the protons, oxygen and electrons in the cathode catalyst layer 14b.

The anode catalyst layer 14a and cathode catalyst layer 14b are each mainly composed of a catalyst-supported material containing a catalyst substance and a support that supports the catalyst substance, and a hydrocarbon-based polymer electrolyte with ion-exchange groups.

The anode catalyst layer 14a and cathode catalyst layer 14b contain ion-exchange groups derived primarily from the hydrocarbon-based polymer electrolyte. The ion-exchange groups are typically sulfonic acid groups. Based on the knowledge of the present inventors, a notable improvement in electric power generation properties is achieved if the ion-exchange group density $\beta$ [$\mu$eq/$cm^2$] of the cathode catalyst layer 14b is larger than the ion-exchange group density $\alpha$ [$\mu$eq/$cm^2$] of the anode catalyst layer 14a, and $\alpha$ and $\beta$ are each adjusted to be within specified ranges. Specifically, $\alpha$ and $\beta$ are adjusted so that the following relational expressions (1), (2) and (3) are simultaneously satisfied.

$$\beta/\alpha > 1.0 \quad \ldots (1)$$

$$\alpha < 0.45 \quad \ldots (2)$$

$$\beta < 0.85 \quad \ldots (3)$$

Also, $\alpha$ is preferably less than 0.42 or less than 0.40. In addition, $\beta$ is preferably less than 0.80 or less than 0.78.

The lower limits for $\alpha$ and $\beta$ are not particularly restricted so long as the ionic conductive of each catalyst layer can be maintained, but preferably $\alpha > 0.01$, $\beta > 0.05$. If $\alpha$ and $\beta$ are too low an ion conduction path will not adequately form, resulting in fewer reaction sites and tending to lower the effect of improved electric power generation properties. Also, preferably $\beta/\alpha < 50$ and more preferably $\beta/\alpha < 45$. If $\beta/\alpha$ is 50 or greater the gas diffusion property of the cathode catalyst layer may be reduced, water produced in the cathode catalyst layer will not easily permeate to the anode catalyst layer side, and the effect of improved electric power generation properties will tend to be reduced.

For example, $\alpha$ and $\beta$ preferably satisfy the combination of the following inequalities (11), (12) and (13), or the combination of the following inequalities (21), (22) and (23).

$$1.0 < \beta/\alpha < 50 \quad \ldots (11)$$

$$\alpha < 0.45 \quad \ldots (12)$$

$$0.05 \leq \beta < 0.85 \quad \ldots (13)$$

$$1.0 < \beta/\alpha < 50 \quad \ldots (21)$$

$$\alpha < 0.45 \quad \ldots (22)$$

$$\beta < 0.80 \quad \ldots (23)$$

For inequality (11), more preferably $1.0 < \beta/\alpha < 45$.

One method that is effective for improving the electric power generation properties when using a fluorine-based polymer electrolyte is a method of optimizing the weight ratio between the fluorine-based polymer electrolyte in the catalyst layer and the support such as a carbon support, or a method of covering the catalyst-supported material surface with the polymer electrolyte. However, when a hydrocarbon-based polymer electrolyte is used as the ion-conducting polymer electrolyte in the catalyst layer as according to the invention, the electric power generation properties are specifically enhanced if $\alpha$ and $\beta$ are adjusted lower so as to satisfy the aforementioned relational expressions.

The ion-exchange group densities $\alpha$ and $\beta$ in each catalyst layer are calculated by the following relational expression, from the basis weight A [mg/cm$^2$] of the polymer electrolyte per unit area in the catalyst layer, and the ion-exchange capacity B [meq/g] of the polymer electrolyte.

$$(\text{Ion-exchange group density})\ [\mu\text{eq/cm}^2] = A \times B$$

The basis weight A of the polymer electrolyte per unit area in the catalyst layer can be determined from the weight concentration of the polymer electrolyte with respect to the total weight of the solid components after removal of the volatile substances (solvent) that are removed by volatilization from the catalyst ink during formation of the catalyst layer, in the catalyst ink used to form the catalyst layer, and the basis weight per unit area of the formed catalyst layer. The term "catalyst ink" means a liquid composition used to form a catalyst layer, as is widely employed in the field. Suitable catalyst inks are described below.

As mentioned above, $\alpha$ and $\beta$ can be adjusted so that the aforementioned relational expressions are satisfied, by appropriately modifying the basis weight A of the polymer electrolyte and the ion-exchange capacity B of the polymer electrolyte, for example. When a catalyst-supported material such as described below is used, these can be adjusted so that the aforementioned relational expressions are satisfied by appropriately modifying the catalyst-supporting ratio of the catalyst-supported material. The basis weight A of the polymer electrolyte can be modified by the thickness and mass of the catalyst layer, and the proportion of polymer electrolyte in the catalyst layer. The ion-exchange capacity B of the polymer electrolyte can be modified by the amount of ion-exchange groups in the polymer electrolyte used.

The hydrocarbon-based polymer electrolytes in the anode catalyst layer 14a and cathode catalyst layer 14b function to mediate exchange of ions between the catalyst substance and polymer electrolyte membrane 12, and they are usually selected so as to conduct the same ion as the polymer electrolyte in the polymer electrolyte membrane 12. The hydrocarbon-based polymer electrolytes also function as binders to bind the catalyst substances.

The polymer electrolytes in the anode catalyst layer 14a and cathode catalyst layer 14b preferably consist of essentially hydrocarbon-based polymer electrolytes alone. The anode catalyst layer 14a and cathode catalyst layer 14b may contain small amounts of polymer electrolytes other than hydrocarbon-based polymer electrolytes, within the scope of the gist of the invention, but their amounts are preferably less than 50 wt% based on the weight of the hydrocarbon-based polymer electrolyte. The hydrocarbon-based polymer electrolyte will be explained later in detail.

The catalyst substances composing the anode catalyst layer 14a and cathode catalyst layer 14b are not particularly restricted so long as they activate the fuel oxidation-reduction reaction, and they may be appropriately selected among those commonly employed in fuel cells. As specific examples of catalyst substances there may be mentioned platinum and platinum-containing alloys such as platinum-rathenium alloy, metal complex catalysts (see "Fuel Cells and Polymers", edited by Research Group on Materials for Fuel Cells, The Society of Polymer Science, Japan, p.103-112, Kyoritsu Publishing, November 10, 2005). It is preferred to use a catalyst-supported material such as platinum-supporting carbon, having a fine particulate catalyst substance supported on a support.

The basis weight of the catalyst substance in the anode catalyst layer 14a per unit area is preferably 0.01-1.0 [mg/cm$^2$]. The basis weight of the catalyst substance in the cathode catalyst layer 14b per unit area is preferably 0.05-0.8 [mg/cm$^2$]. The basis weight of the catalyst substance per unit area of the catalyst layer can also be appropriately controlled by the weight concentration of the catalyst substance with respect to the solid content after removal of the volatile substances from the catalyst ink, similar to the basis weight A of the polymer electrolyte per unit area in the catalyst layer explained above.

In order to increase electron transport with the catalyst layer, it is preferred to use a catalyst-supported material having the catalyst substance supported on the surface of a conductive support. As conductive supports there may be mentioned conductive carbon materials such as carbon black and carbon nanotubes, and ceramic materials such as titanium oxide.

When such a catalyst-supported material is used, the basis weight of the support per unit area in the anode catalyst layer 14a is preferably 0.01-10 [mg/cm$^2$]. The basis weight of the support in the cathode catalyst layer 14b per unit area is preferably 0.06-2.0 [mg/cm$^2$]. The anode catalyst layer can also be controlled to such a basis weight in the same manner as the cathode catalyst layer.

The catalyst-supporting ratio of the catalyst-supported material, i.e. the content ratio of the catalyst substance, is preferably 20-90 wt% and more preferably 40-80 wt% based on the total catalyst-supported material.

The anode catalyst layer 14a and cathode catalyst layer 14b may also contain other components in addition to the components mentioned above. For example, the catalyst layers may contain additives selected from among water-repellent materials such as PTFE used to increase the water-repellency of the catalyst layer, pore-forming materials such as calcium carbonate used to increase the gas diffusibility of the catalyst layer, and stabilizers such as metal oxide used to increase the durability of the MEA 20.

The polymer electrolyte membrane 12 is a membrane formed from a hydrocarbon-based polymer electrolyte and other components added as necessary. The hydrocarbon-based polymer electrolyte used here may be the same type or a different type than the hydrocarbon-based polymer electrolytes in the catalyst layers. The hydrocarbon-based polymer electrolyte will be explained later in detail. As examples of components to be added to the polymer electrolyte membrane 12 there may be mentioned additives such as plasticizers, stabilizers, release agents and humectants. Preferably used among these are stabilizers, in order to increase the chemical stability including oxidation resistance and/or radical resistance.

The polymer electrolyte membrane 12 most preferably includes a stabilizer for radical resistance. During operation of the fuel cell, the peroxides produced in the catalyst layer are converted to radical species while diffusing in the polymer electrolyte membrane adjacent to the catalyst layer, and this causes deterioration of the hydrocarbon-based polymer electrolyte composing the polymer electrolyte membrane. If the polymer electrolyte membrane 12 contains a stabilizer which minimizes such deterioration, it is possible to avoid such inconvenience. Preferred stabilizers are antioxidants such as hindered phenol-based antioxidants and amine-based antioxidants, as well as aromatic phosphonic acids comprising the structure represented by the following general formula (2), that have been already discovered and disclosed in Japanese Unexamined Patent Publication No. 2003-282096 by the present applicant.

[Chemical Formula 1]

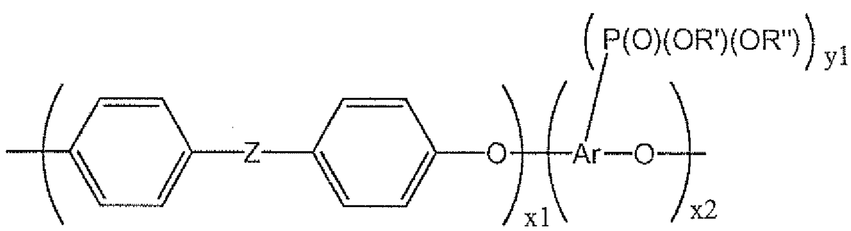

(2)

In the formula, Z represents $-SO_2-$ or -CO-, and x1 and x2 are numerical values in the range of 0.01-0.99 representing the polymerization ratio of each repeating unit based on the total number of repeating units in the entire

aromatic phosphonic acid. Ar represents a C4-18 divalent aromatic group optionally containing a hetero element and optionally having a substituent. The symbol y1 is a positive integer representing the average number of groups represented by P(O)(OR')(OR") bonded to Ar, and it is preferably no greater than 8. R' and R" each independently represent a hydrogen atom or an alkyl group.

The pattern of copolymerization of the repeating unit in the aforementioned aromatic phosphonic acids is not particularly restricted and may be random copolymerization, alternating copolymerization or block copolymerization, but alternating copolymerization or random copolymerization is the preferred copolymerization pattern for easier production. The P(O)(OR')(OR") groups are also preferably phosphonic acid groups (where both R' and R" are hydrogen atoms). When the group represented by P(O)(OR')(OR") is a phosphonic acid group and the compositional ratio of halogen atoms is no greater than 15 wt%, such aromatic phosphonic acids are included among hydrocarbon-based polymer electrolytes. The symbol x1 is preferably 0.60-0.90 and more preferably 0.70-0.90.

The aromatic phosphonic acids mentioned above contain two repeating units as essential components, as represented in general formula (2) above, but they may also contain other repeating units.
For example, they may contain small amounts of a repeating unit represented by the following general formula (2a).

[Chemical Formula 2]

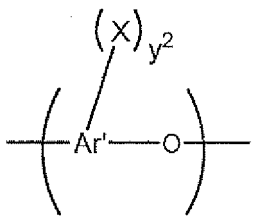

(2a)

In formula (2a), X represents a halogen atom, and Ar' represents a C4-18 divalent aromatic group optionally containing a hetero element. The symbol $y^2$ represents the number of X substituents per repeating unit of the polymer portion containing Ar', and $y^2$ is a positive integer of no greater than 8. When several X substituents are present, they may be the same or different.

For increased mechanical strength, the polymer electrolyte membrane 12 may be a composite membrane obtained by compositing the electrolyte composition comprising the hydrocarbon-based polymer electrolyte, and a prescribed support. The support may be, for example, a base material with a fibril form or porous membrane form.

The polymer electrolyte membrane 12 may be formed, for example, by a so-called solvent casting method which employs a hydrocarbon-based polymer electrolyte-containing polymer electrolyte solution. The polymer electrolyte solution may be coated onto a base such as a glass panel to form a polymer electrolyte membrane on the base, and the base then released. Alternatively, the polymer electrolyte solution may be coated onto the catalyst layer to form a polymer electrolyte membrane on the catalyst layer.

The gas diffusion layers 16a, 16b are formed sandwiching the MEA 20 on either side, and they function to promote diffusion of source gas to the anode catalyst layer 14a and cathode catalyst layer 14b. The gas diffusion layers 16a, 16b are preferably conductive porous bodies. A porous carbon nonwoven fabric or carbon paper is preferably used, for example.

The separators 18a, 18b are preferably formed from conductive materials. As examples of conducting materials to form the separators there may be mentioned carbon, resin mold carbon, titanium and stainless steel. On the gas diffusion layer 16a, 16b sides of the separators 18a, 18b there are formed grooves as fluid channels for supply of source gas, although these are not shown in the drawing.

The hydrocarbon-based polymer electrolytes used in the polymer electrolyte membrane 12, anode catalyst layer 14a and cathode catalyst layer 14b are ionic conductive high molecular compounds, and they contain hydrocarbons as the main components with essentially no halogen atoms such as fluorine atoms. Specifically, the amount of halogen atoms in each hydrocarbon-based polymer electrolyte is no greater than 15 wt% based on the weight of the entire hydrocarbon-based polymer electrolyte. The hydrocarbon-based polymer electrolyte has a main chain composed mainly of a hydrocarbon. However, the main chain of the hydrocarbon-based polymer electrolyte may also contain heteroatoms such as oxygen, sulfur, nitrogen, phosphorus and silicon.

The hydrocarbon-based polymer electrolyte comprises acidic groups or basic groups as the ion-exchange groups. The ion-exchange groups are preferably acidic groups. Using a hydrocarbon-based polymer electrolyte with acidic groups can yield a fuel cell with even more excellent electric power generation performance. As examples of acidic groups there may be mentioned groups selected from the group consisting of sulfonic acid ($-SO_3H$), carboxyl ($-COOH$), phosphonic acid ($-PO_3H_2$), phosphinic acid ($-OPO_3H_2$), sulfonylimide ($-SO_2NHSO_2-$) and phenolic hydroxyl groups. Preferred among these as acidic groups are sulfonic acid and phosphonic acid groups, with sulfonic acid groups being especially preferred. Hydrocarbon-based polymer electrolytes with sulfonic acid groups have excellent proton conductivity, and therefore when such hydrocarbon-based polymer electrolytes are used the obtained MEAs and fuel cells exhibit even more excellent electric power generation performance. The hydrocarbon-based polymer electrolyte composing the polymer electrolyte membrane 12 that is used to form the MEA most preferably comprises a hydrocarbon-based polymer electrolyte with a sulfonic acid group and the aforementioned aromatic phosphonic acid to ensure radical resistance stability.

As representative examples of hydrocarbon-based polymer electrolytes there may be mentioned the following (A), (B), (C), (D) and (E).

(A) Hydrocarbon-based polymer electrolytes having a molecular chain composed of an aliphatic hydrocarbon and a sulfonic acid and/or phosphonic acid group bonded to the molecular chain.

(B) Hydrocarbon-based polymer electrolytes having a molecular chain with an aromatic group and optionally with a heteroatom such as oxygen, and a sulfonic acid and/or phosphonic acid group bonded to the molecular chain.

(C) Hydrocarbon-based polymer electrolytes having a molecular chain composed of a polymer with an aliphatic hydrocarbon-containing repeating unit and an inorganic repeating unit such as a siloxane or phosphazene group, and a sulfonic acid and/or phosphonic acid group bonded to the molecular chain.

(D) Hydrocarbon-based polymer electrolytes having a main chain composed of a molecular chain comprising an aliphatic hydrocarbon, a molecular chain with an aromatic group and optionally with a heteroatom, and a two or more molecular chains selected from among molecular chains composed of a polymer comprising an aliphatic hydrocarbon-containing repeating unit and an inorganic repeating unit, and a sulfonic acid and/or phosphonic acid group bonded to the main chain.

(E) Hydrocarbon-based polymer electrolytes having a nitrogen atom-containing main chain or side chain and an acidic compound such as sulfuric acid or phosphoric acid introduced by ionic bonding onto the main chain or side chain.

As examples of the (A) hydrocarbon-based polymer electrolytes there may be mentioned polyvinylsulfonic acid, polystyrenesulfonic acid and poly($\alpha$-methylstyrene)sulfonic acid.

As examples of the (B) hydrocarbon-based polymer electrolytes there may be mentioned homopolymers selected from among polyetherether ketone, polysulfone, polyethersulfone, poly(arylene ethers), polyimide, poly((4-phenoxybenzoyl)-1,4-phenylene), polyphenylene sulfide and polyphenylquinoxalene, having sulfonic acid groups introduced therein, sulfoarylated polybenzimidazoles, sulfoalkylated polybenzimidazoles, phosphoalkylated polybenzimidazoles (see Japanese Unexamined Patent Publication HEI No. 9-110982, for example), and phosphonated poly(phenylene ethers) (see J. Appl. Polym. Sci., 18, 1969(1974), for example).

As examples of the (C) hydrocarbon-based polymer electrolytes there may be mentioned the sulfonic acid group-introduced polyphosphazenes described in the literature (Polymer Prep., 41, No.1, 70(2000)). A (C) hydrocarbon-based polymer electrolyte can be easily produced pursuant to a phosphonic acid group-containing polysiloxane.

The main chain in the (D) hydrocarbon-based polymer electrolytes may be a random copolymer, or an alternating copolymer or block copolymer. As examples of random copolymers with sulfonic acid groups introduced therein there may be mentioned the sulfonated polyethersulfone polymers mentioned in Japanese Unexamined Patent Publication HEI No. 11-11679.

As examples of the (E) hydrocarbon-based polymer electrolytes there may be mentioned the phosphoric acid-containing polybenzimidazoles mentioned in Japanese Patent Public Inspection HEI No. 11-503262.

The polymer electrolyte membrane 12, anode catalyst layer 14a and cathode catalyst layer 14b preferably each independently comprise at least one hydrocarbon-based polymer electrolyte selected from the group consisting of (A), (B), (C), (D) and (E) above. They are most preferably hydrocarbon-based polymer electrolytes selected from (B) and (D), from the viewpoint of achieving both high electric power generation performance and durability. Of the examples mentioned above, aromatic-based polymer electrolytes with an aromatic group-containing main chain are preferred from the viewpoint of heat resistance and easier recycling. The aromatic-based polymer electrolyte used will usually be one that is soluble in solvents, so as to easily form a polymer electrolyte membrane of the desired film thickness by a known solution casting method. The ion-exchange groups of the aromatic-based polymer electrolyte may be directly bonded to the aromatic groups of the main chain of the polymer, or they may be bonded via divalent linking groups such as alkylene groups. They may also be bonded in a combination of such forms.

In the main chain of the aromatic-based polymer electrolyte, for example, divalent aromatic groups may be directly linked as in polyarylenes, or divalent aromatic groups may be linked via divalent groups. As divalent groups to link the aromatic groups there may be mentioned oxy (-O-), thioxy (-S-), carbonyl, sulfinyl, sulfonyl, amide (-NH-CO- or -CO-NH-), ester (-O-CO- or -CO-O-), carbonic acid ester (-O-CO-O-), approximately C1-4 alkylene, approximately C1-4 fluorine-substituted alkylene, approximately C2-4 alkenylene and approximately C2-4 alkynylene groups. As divalent aromatic groups in the main chain of the aromatic-based polymer electrolyte there may be mentioned aromatic groups such as phenylene, naphthalenediyl, anthracenylene and fluorenediyl, and aromatic heterocyclic groups such as pyridinediyl, furanediyl, thiophenediyl, imidazolyl, indolediyl and quinoxalinediyl.

A divalent aromatic group in the aromatic-based polymer electrolyte may have the aforementioned acidic groups, and it may optionally have other substituents. As specific examples of substituents for aromatic groups there may be mentioned C1-20 alkyl, C1-20 alkoxy, C6-20 aryl, C6-20 aryloxy, C2-20 acyl, nitro, and halogen atoms. When the aromatic-based polymer electrolyte has a halogen atom as a substituent bonded to the aromatic group, or when it has a fluorine-substituted alkylene group as a divalent group linking the aromatic groups, the compositional ratio of halogen atoms is no greater than 15 wt% as the compositional ratio by elemental weight in the aromatic-based polymer electrolyte.

When formed into a membrane, the hydrocarbon-based polymer electrolyte composing the polymer electrolyte membrane 12 preferably forms a phase separation structure (preferably a microphase separation structure) with a first domain and a second domain, wherein the first domain has a higher ion-exchange group concentration than the second domain. The first domain with the high ion-exchange group concentration contributes primarily to proton conductivity, while the domain with low ion-exchange group concentration contributes primarily to mechanical strength.

A microphase separation structure is a form in which the domain width, more specifically identity pitch, of the first and second domains is between several nm and several 100 nm. The identity pitch is preferably 5 nm-100 nm. Formation of a microphase separation structure can be confirmed, for example, by observing the formed hydrocarbon-based polymer electrolyte with a transmission electron microscope (TEM).

The hydrocarbon-based polymer electrolyte forming a membrane with a microphase separation structure may be a block copolymer or graft copolymer having a first block composed of repeating units with ion-exchange groups, and second blocks composed essentially of repeating units with no ion-exchange groups. Such hydrocarbon-based polymer electrolytes are preferred for use because their different polymer blocks are bonded by chemical bonds, whereby they readily produce microphase separation on the order of the molecular chain size. Block copolymers are most preferably used.

The first block in the preferred block copolymers mentioned above contains an average of at least 0.5 ion-exchange groups per repeating unit composing the block. The first block more preferably contains an average of at least 1.0 ion-exchange groups per repeating unit. On the other hand, the second block may also contain a small number of repeating units with ion-exchange groups, in a range such that a microphase separation structure is still formed. Specifically, the number of ion-exchange groups in the second block is normally an average of less than 0.5 per repeating unit composing the block. The number of ion-exchange groups in the second block is more preferably no greater than an average of 0.1 and even more preferably no greater than an average of 0.05 per repeating unit.

As typical examples of preferred block copolymers there may be mentioned block copolymers having the aromatic polyether structure described in Japanese Unexamined Patent Publication No. 2005-126684 and Japanese Unexamined Patent Publication No. 2005-139432, comprising a block composed of a repeating unit with ion-exchange groups and a block essentially composed of a repeating unit with no ion-exchange groups. The block copolymers comprising a polyarylene block with acidic groups, described in International Patent Publication No. WO2006/95919 already disclosed by the present applicant, can be used as hydrocarbon-based polymer electrolytes to form polymer electrolyte membranes with high levels of both ionic conductivity and water resistance. An MEA with excellent electric power generation performance can also be provided by a synergistic effect with a catalyst layer having specific $\alpha$ and $\beta$ values for the hydrocarbon-based polymer electrolytes.

As representative examples of block copolymers that may be suitably used as hydrocarbon-based polymer electrolytes, there may be mentioned the block copolymers represented by chemical formulas (1a), (1b) and (1c) below. In the formulas, n and m each represent number of repeating units. The label "block" in the formulas indicates formation of a block copolymer having blocks composed of each repeating unit.

[Chemical Formula 3]

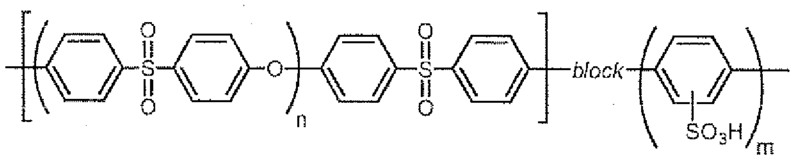 (1a)

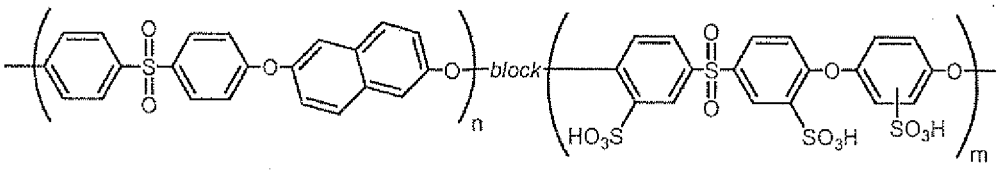 (1b)

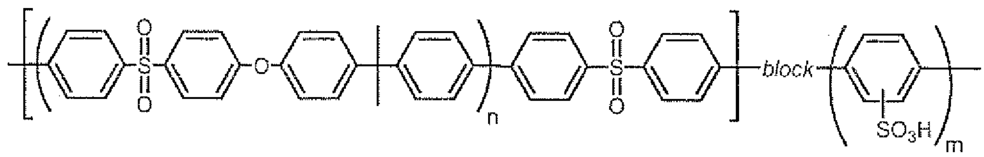 (1c)

The optimal range for the molecular weight of the hydrocarbon-based polymer electrolyte may be appropriately determined according to the structure, but the number-average molecular weight based on polystyrene is preferably 1000-1000000 according to GPC (gel permeation chromatography). The number-average molecular weight is preferably at least 5000 and more preferably at least 10000. The number-average molecular weight is also preferably no greater than 800000 and more preferably no greater than 500000.

A solution casting method as mentioned above is preferred for obtaining the polymer electrolyte membrane 12 comprising a hydrocarbon-based polymer electrolyte membrane such as described above, because it allows a membrane with the desired thickness to be obtained by a simple procedure. Solution casting is a method in which a polymer electrolyte solution obtained by dissolving the hydrocarbon-based polymer electrolyte in an organic solvent is coated onto a support base such as a glass panel and the organic solvent is removed to form a film. The organic solvent is selected in consideration of its solubility for the polymer electrolyte used, but for an aromatic-based polymer electrolyte as a preferred hydrocarbon-based polymer electrolyte, there are preferred N,N-dimethylacetamide ("DMAc"), N,N-dimethylformamide ("DMF"), dimethyl sulfoxide ("DMSO,") and N-methyl-2-pyrrolidone ("NMP"), as well as mixtures of the foregoing.

The MEA 20 can be formed, for example via a step in which a catalyst ink is used to form the anode catalyst layer 14a and cathode catalyst layer 14b. The catalyst ink comprises a catalyst substance and/or catalyst-supported material, a hydrocarbon-based polymer electrolyte, and a solvent in which these are dispersed or dissolved. A method using a catalyst ink has advantages of being convenient, and allowing easier control of the amount of catalyst substance in the electrode catalyst layer to be formed.

The following methods (a), (b) and (c) may be used as methods for forming the MEA 20 using a catalyst ink.

(a) A method in which the catalyst ink is directly coated onto the polymer electrolyte membrane surface and the solvent is removed from the coated catalyst ink.

(b) A method in which the catalyst ink is directly coated onto a base serving as the gas diffusion layer, such as carbon paper, the solvent is removed from the coated catalyst ink to obtain a laminated body comprising the base and the electrode catalyst layer, the laminated body is then situated with its electrode catalyst layer side contacting the polymer electrolyte membrane and the entirety is contact bonded by pressing or the like.

(c) A method in which the catalyst ink is directly coated onto a support base such as a poly(tetrafluoroethylene) film or polyimide film, the solvent is removed from the coated catalyst ink to obtain a laminated body comprising the support base and the electrode catalyst layer, the laminated body is then situated with its electrode catalyst layer side contacting the polymer electrolyte membrane and the entirety is contact bonded by pressing or the like to contact the polymer electrolyte membrane and the electrode catalyst layer, after which the support base alone is released.

Method (a) is preferred among these methods. According to method (a) it is possible to achieve firm adhesion between the polymer electrolyte membrane and electrode catalyst layer in the obtained MEA, and to obtain a solid polymer fuel cell with more excellent electric power generation properties. According to method (b) it is possible to obtain an MEA having the gas diffusion layer laminated on the side of the electrode catalyst layer opposite the polymer electrolyte

membrane side. An assembly composed of a polymer electrolyte membrane 12, anode catalyst layer 14a, cathode catalyst layer 14b and gas diffusion layer 16a, 16b is often referred to as a membrane-electrode-gas diffusion layer assembly (MEGA).

The catalyst ink will now be explained in detail. As mentioned above, the catalyst ink contains a catalyst substance and/or catalyst-supported material, a hydrocarbon-based polymer electrolyte and a solvent as essential components, but when method (a) above is applied as the preferred coating method, the solvent may be selected in a range that does not significantly impair the coated polymer electrolyte membrane. From this viewpoint, the solvent is preferably water, a hydrophilic solvent or a mixture of these. Such solvents generally have low solubility for hydrocarbon-based polymer electrolytes that are applied in catalyst inks, and therefore it is preferred for the catalyst ink used for the invention to be an emulsion in which at least a portion of the hydrocarbon-based polymer electrolyte is dispersed in the solvent. When the catalyst substance and/or catalyst-supported material has low solubility in the solvent, they may be present in the catalyst ink in a form dispersed in the solvent.

A suitable method for producing such catalyst ink will now be explained. First, a polymer electrolyte emulsion is prepared. The polymer electrolyte emulsion is more preferably obtained by, for example, a method comprising a preparation step in which a polymer electrolyte solution comprising the hydrocarbon-based polymer electrolyte dissolved in an organic solvent is prepared, and a formulation step in which the polymer electrolyte solution is added dropwise into a solvent selected from water and hydrophilic solvents to prepare a dispersion solution comprising the polymer electrolyte particle dispersed in the solvent. The obtained dispersion solution may be used directly as the polymer electrolyte emulsion without removal of the organic solvent, or the polymer electrolyte emulsion may be used after removing the organic solvent if necessary. An acid or alkali may also be added from the viewpoint of improving the dispersion stability of the polymer electrolyte emulsion. In addition, the organic solvent used in the polymer electrolyte solution in the preparation step is preferably an organic solvent that can moderately dissolve the hydrocarbon-based polymer electrolyte. Specifically, an organic solvent is preferably used in the polymer electrolyte solution in the solution casting method described above. The ion-exchange capacity of the polymer electrolyte in the polymer electrolyte emulsion is preferably about 0.5-6.0 meq/g. The polymer electrolyte may form a crosslinked structure by partial crosslinking. When a hydrocarbon-based polymer electrolyte forming a crosslinked structure is used, the polymer electrolyte emulsion may be produced by replacing the polymer electrolyte solution in the preparation step with a gel particle dispersion of the hydrocarbon-based polymer electrolyte dispersed as gel particles in an organic solvent. A hydrophilic solvent used as the dispersing medium for the polymer electrolyte emulsion is preferably a lower alcohol, and water or a mixture of water and an alcohol is particularly preferred as the dispersing medium. The concentration of the hydrocarbon-based polymer electrolyte in the polymer electrolyte emulsion is preferably 0.1-10 wt%.

The catalyst substance is added to the polymer electrolyte emulsion obtained in this manner to obtain a catalyst ink. The catalyst ink is of course prepared so as to avoid any notable reduction in dispersion stability of the polymer electrolyte particles in the polymer electrolyte emulsion, but also in such a manner to facilitate uniform mixing of the catalyst substance. The mixing method used to accomplish uniform mixing may employ an ultrasonic dispersion device, homogenizer, ball mill, planetary ball mill, sand mill or the like.

The means for directly coating the catalyst ink onto the polymer electrolyte membrane 12 may be a known coating method employing a die coater, screen printing, spraying method or an ink-jet. Spraying is preferred among these methods. "Spraying method" means spraying a fluid material by the jet force of a compressed gas to produce a fine particulate form of the material which adheres onto a board or the like. Specifically, the method described in Japanese Unexamined Patent Publication No. 2004-89976 may be suitably used for spraying method.

The fuel cell 10 may be produced, for example, by a method comprising a step of obtaining the MEGA and a step of sandwiching the MEGA with a pair of separators 18a, 18b and bonding them together.

The fuel cell 10 may be used after sealing with a gasket or the like, for example. A plurality of individual fuel cells 10 may also be used in series as a fuel cell stack.

## Examples

The present invention will now be explained in greater detail by examples. However, the invention is not limited to these examples.

### 1. Synthesis of polymer electrolyte

#### (1) Polymer electrolyte 1

After placing 2.10 parts by weight of polyethersulfone having terminal chloro groups (trade name: SUMIKA EXCEL PES5200P by Sumitomo Chemical Co., Ltd., number-average molecular weight Mn = $5.2 \times 10^4$, weight-average molecular weight Mw = $8.8 \times 10^4$), 5.70 parts by weight of sodium 2,5-dichlorobenzenesulfonate, 9.32 parts by weight

of 2,2-bipyridyl, 142.23 parts by weight of DMSO and 55.60 parts by weight of toluene in a reactor under a nitrogen atmosphere, the mixture was stirred. Next, the reactor was reduced in pressure to around 10 kPa and the internal temperature was raised to 60-70°C for 8 hours of reflux dewatering.

After dewatering, the toluene was distilled off and the internal temperature was kept at 65°C while adding 15.407 parts by weight of bis(1,5-cyclooctadiene)nickel(0) [$Ni(COD)_2$]. After the addition, the mixture was stirred at an internal temperature of 70°C for 5 hours. After cooling the reaction mixture to room temperature, the reaction mixture was loaded into a large amount of methanol to precipitate a polymer, the precipitated polymer was filtered and washed with 6N hydrochloric acid and water, and then washed with hot water at above 90°C for 2 hours, filtered and dried, to obtain polymer electrolyte 1 as a block copolymer represented by chemical formula (1a) above.

(2) Polymer electrolyte 2

(Synthesis of ion-exchange group (sulfonic acid group)-containing high molecular compound)

After placing 9.32 parts by weight of dipotassium 4,4'-difluorodiphenylsulfone-3,3'-disulfonate, 4.20 parts by weight of potassium 2,5-dihydroxybenzenesulfonate, 59.6 parts by weight of DMSO and 9.00 parts by weight of toluene under an argon atmosphere in a flask equipped with an azeotropic distillation apparatus, the mixture was stirred at room temperature while bubbling in argon gas for 1 hour.

Next, 2.67 parts by weight of potassium carbonate was added to the mixture and stirring was continued while heating at 140°C for azeotropic dehydration. Heating was subsequently continued while distilling off the toluene, to obtain a DMSO solution containing a high molecular compound with sulfonic acid groups. The total heating time was 14 hours. The obtained solution was allowed to cool to room temperature.

(Synthesis of high molecular compound with essentially no ion-exchange groups)

After placing 8.32 parts by weight of 4,4'-difluorodiphenylsulfone, 5.36 parts by weight of 2,6-dihydroxynaphthalene, 30.2 parts by weight of DMSO, 30.2 parts by weight of NMP and 9.81 parts by weight of toluene under an argon atmosphere in a flask equipped with an azeotropic distillation apparatus, the mixture was stirred at room temperature while bubbling in argon gas for 1 hour.

Next, 5.09 parts by weight of potassium carbonate was added to the mixture and heated stirring was continued at 140°C for azeotropic dehydration. Heating was subsequently continued while distilling off the toluene. The total heating time was 5 hours. The obtained solution was allowed to cool to room temperature to obtain a NMP/DMSO mixed solution containing a high molecular compound with essentially no ion-exchange groups.

(Synthesis of block copolymer)

The NMP/DMSO containing the high molecular compound with essentially no ion-exchange groups obtained as described above was stirred while adding the total amount of the DMSO solution containing the high molecular compound with sulfonic acid groups, 80.4 parts by weight of NMP and 45.3 parts by weight of DMSO, and the mixture was heated at 150°C for 40 hours for block copolymerization reaction.

The reaction mixture was dropped into a large amount of 2N hydrochloric acid and the produced precipitate was left immersed for 1 hour. The precipitate was then filtered out and re-immersed in 2N hydrochloric acid for 1 hour. The precipitate was filtered and rinsed with water, and then immersed in a large amount of hot water at 95°C for 1 hour. The precipitate was filtered and dried by heating at 80°C for 12 hours, to obtain polymer electrolyte 2 as a block copolymer represented by chemical formula (1b) above.

(Formulation of polymer electrolyte emulsion)

Polymer electrolyte 2 obtained above was dissolved in 1-methyl-2-pyrrolidone to a concentration of 1.0 wt% to prepare a 100 g of a polymer electrolyte solution. The 100 g of polymer electrolyte solution was added dropwise into 900 g of distilled water using a buret at a dropping rate of 3-5 g/min to dilute the polymer electrolyte solution. The dispersing medium of the diluted polymer electrolyte solution was exchanged with running water for 72 hours using a dialysis membrane dialyzing cellulose tube (trade name: UC36-32-100 by Sanko Junyaku Co., Ltd., molecular cutoff: 14,000). The dispersing medium of the obtained polymer electrolyte dispersion was analyzed and found to have a water content of ≥99.9 wt%. The dispersing medium-exchanged polymer electrolyte dispersion was concentrated to 2.2 wt% using an evaporator to obtain a polymer electrolyte emulsion containing the polymer electrolyte 2.

(3) Polymer electrolyte 3

In a 200 mL flask equipped with a Dean-Stark tube there were added 4.00 g (16.06 mmol) of sodium 2,5-dichlorobenzenesulfonate, 7.24 g (46.38 mmol) of 2,2'-bipyridyl, 1.51 g of polyethersulfone having chloro groups on both ends, represented by formula (7) below (trade name: "SUMIKA EXCEL PES 5200P", product of Sumitomo Chemical Co., Ltd.), 533 mg (1.61 mmol) of 1-(4-bromobenzyloxy)-2,5-dichlorobenzene, 100 mL of dimethyl sulfoxide and 35 mL of toluene, and the mixture was subjected to azeotropic dehydration under reduced pressure at 100°C for 9 hours under an argon atmosphere, after which the toluene was distilled off out of the system and the mixture was allowed to cool to 70°C. Next, 11.60 g (42.16 mmol) of $Ni(cod)_2$ was added at once at 70°C. Immediately after addition of the $Ni(cod)_2$, the temperature was raised to 85°C and the bath temperature was kept constant while stirring. At about 5 minutes after addition of the $Ni(cod)_2$, the polymerization solution gelled and stirring was continued for 30 minutes. The obtained gel-like polymerization solution was poured into methanol, and then methanol rinsing/filtration of the crosslinked aromatic polymer was repeated 3 times, rinsing with 6 mol/L aqueous hydrochloric acid/filtration was repeated 3 times, and rinsing/filtration was repeated with deionized water until the filtrate became neutral, after which it was dried at 80°C to obtain 3.86 g of a solid crosslinked aromatic polymer. Next, 1.40 g of the solid crosslinked aromatic polymer was pulverized for 5 minutes with a sample mill and then mixed with 149 g of deionized water, and a step of pulverizing for 20 minutes using a homogenizer (trade name: Ultrasonic Homogenizer US-150T by Nissei Corp.) was repeated 3 times until the precipitate was no longer visible, to obtain a 0.9 wt% polymer electrolyte dispersion.

[Chemical Formula 4]

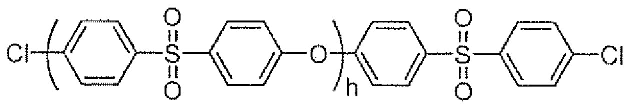
(7)

(4) Polymer electrolyte P1

Synthesis of polymer electrolyte P1

In a flask equipped with an azeotropic distillation device there were placed 600 mL of DMSO (dimethyl sulfoxide), 200 mL of toluene, 26.5 g (106.3 mmol) of sodium 2,5-dichlorobenzenesulfonate, 10.0 g of terminal chloro-type polyethersulfone (trade name: SUMIKA EXCEL PES5200P by Sumitomo Chemical Co., Ltd., number-average molecular weight = $5.4 \times 10^4$, weight-average molecular weight = $1.2 \times 10^5$) and 43.8 g (280.2 mmol) of 2,2'-bipyridyl, and the mixture was stirred under an argon atmosphere. The oil bath was then raised in temperature to 150°C and the moisture in the system was removed by azeotropic dehydration while distilling off the toluene. This was then cooled to 60°C, and 73.4 g (266.9 mmol) of bis(1,5-cyclooctadiene)nickel(0) was added, the oil bath temperature was raised to 80°C and the mixture was stirred for 5 hours at the same temperature to obtain a reaction mixture.

After being allowed to cool, the reaction mixture was poured into a large amount of 6 mol/L hydrochloric acid to precipitate a polymer, and the polymer was filtered. Rinsing/filtration of the filtered polymer with 6 mol/L hydrochloric acid was then repeated several times, after which the polymer was rinsed until the filtrate reached neutral, and the mixture was agitated for 2 hours with hot water at above 90°C for hot water rinsing, and filtered. This was dried under reduced pressure to obtain 16.3 g of a polyarylene-based block copolymer (polymer electrolyte P1). The number-average molecular weight of the polymer electrolyte P1 was 100000, and the weight-average molecular weight was 260000. The number-average molecular weight and weight-average molecular weight are the values measured by gel permeation chromatography (GPC) and calculated using a standard polystyrene calibration curve. The GPC analysis conditions were as follows.
GPC measuring apparatus: HLC-8220 by TOSOH
Column: Two AT-80 M columns by Shodex connected in series.
Column temperature: 40°C
Mobile phase solvent: Dimethylacetamide (LiBr added to 10 mmol/$dm^3$)
Solvent flow rate: 0.5 mL/min

(Formulation of polymer electrolyte emulsion)

A 1.0 g portion of polymer electrolyte P1 was dissolved in 99 g of N-methylpyrrolidone (NMP) to produce 100

g of solution. The solution was slowly dropped into 900 g of water while stirring, to obtain a mixture of the polymer electrolyte, NMP and water. The mixture was enclosed with a dialysis membrane (trade name: UC36-32-100 by Sanko Junyaku Co., Ltd., molecular cutoff: 14,000) and washed with running water for 72 hours. The mixture was then removed from the dialysis membrane and concentrated to 50 g using an evaporator under conditions with a temperature of 60°C and a pressure of 50 mTorr to obtain an emulsion of polymer electrolyte P1. The concentration of the polymer electrolyte P1 in the obtained emulsion was 0.70 wt%.

2. Synthesis of stabilizer

The random copolymer represented by the following chemical formula was synthesized using diphenylsulfone as the solvent and reacting 4,4'-dihydroxydiphenylsulfone, 4,4'-dihydroxybiphenyl and 4,4'-dichlorodiphenylsulfone in a molar ratio of 4:6:10 in the presence of potassium carbonate. The numbers in parentheses in the formula indicate the molar ratios of each repeating unit.

[Chemical Formula 5]

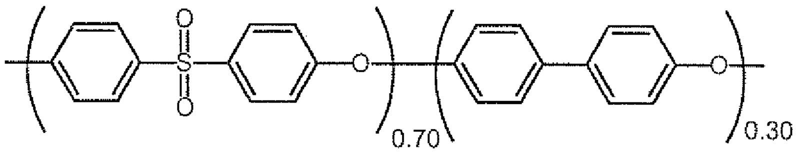

Next, following the method described in Japanese Unexamined Patent Publication No. 2003-282096, the random copolymer represented by the above chemical formula was subjected to bromination and phosphonic acid esterification treatment, and then further hydrolyzed to obtain a polymer having a structure with approximately 0.2 bromo groups and approximately 1.7 phosphonic acid groups for each unit comprising the oxybiphenylene structure in the chemical formula. This was used as the stabilizer for formation of the polymer electrolyte membrane.

3. Fabrication of polymer electrolyte membrane

A polymer electrolyte solution was formulated by dissolving a mixture of the polymer electrolyte 1 and stabilizer obtained as described above in a weight ratio of 9:1 in DMSO to a concentration of about 15 wt%. The polymer electrolyte solution was dropped onto a glass panel and the polymer electrolyte solution on the glass panel was spread evenly using a wire coater. The clearance of the wire coater was varied during this time to control the coating thickness. After coating, the polymer electrolyte solution was dried at 80°C under ordinary pressure to form a membrane. The membrane was immersed in 1 mol/L hydrochloric acid and then rinsed with ion-exchanged water, and further dried at ordinary temperature to obtain a polymer electrolyte membrane with a thickness of 20 μm.

4. Measurement of ion-exchange capacity

A membrane for measurement was formed from the polymer electrolyte by solution casting, and a halogen moisture content meter (trade name: HR-73 by Mettler-Toledo Inc.) set to a heating temperature of 105°C was used to determine the dry weight of the formed polymer electrolyte membrane. The membrane was then immersed in 5 mL of aqueous 0.1 mol/L sodium hydroxide, and then 50 mL of ion-exchanged water was added and the mixture was allowed to stand for 2 hours. The solution in which the membrane had been immersed was then subjected to neutralization titration by gradual addition of 0.1 mol/L hydrochloric acid, to determine the neutralization point. The ion-exchange capacity (units: meq/g) of the polymer electrolyte was calculated from the dry weight of the polymer electrolyte membrane and the amount of hydrochloric acid required for the neutralization. The ion-exchange capacities of polymer electrolytes 1, 2, 3 and P1 were measured by this procedure, yielding values of 2.2 meq/g, 1.7 meq/g, 3.1 meq/g and 2.3 meq/g.

5. Assembly and evaluation of fuel cells

(Example 1)

(Preparation of catalyst ink 1)

Into 3.35 g of an emulsion of polymer electrolyte 2 there was loaded 0.50 g of platinum-supporting carbon black, with platinum supported at 70.0 wt%, and then 21.83 g of ethanol and 3.23 g of water were added. The obtained mixture was subjected to ultrasonic treatment for 1 hour and then stirred for 6 hours with a stirrer to obtain catalyst ink 1.

(Preparation of catalyst ink 2)

Into 2.67 g of an emulsion of polymer electrolyte 3 there was loaded 0.50 g of platinum-supporting carbon powder, with platinum supported at 70.0 wt%, and then 28.19 g of ethanol and 4.17 g of water were added. The obtained mixture was subjected to ultrasonic treatment for 1 hour and then stirred for 6 hours with a stirrer to obtain catalyst ink 2.

(Fabrication of MEA)

The polymer electrolyte membrane fabricated in the manner described above was placed on a stage and the catalyst ink 1 was coated by spraying onto a 5.2 cm-square region at the center of one side. The spraying was carried out using a large pulse spray catalyst-forming apparatus (Spray Gun Model NCG-FC (CT) by Nordson, KK.). The distance was 6 cm from the discharge slit to the membrane, and the stage temperature was set to 75°C. After recoating in the same manner, it was allowed to stand for 15 minutes on the stage to remove the solvent and form an anode catalyst layer. Based on the composition of catalyst ink 1 and the coated ink weight, the basis weight of the platinum in the anode catalyst layer was calculated to be 0.16 mg/cm$^2$ and the basis weight of the polymer electrolyte was calculated to be 0.035 mg/cm$^2$. Next, catalyst ink 2 was coated in the same manner on the other side of the polymer electrolyte to form a cathode catalyst layer. The basis weight of platinum in the cathode catalyst layer was calculated to be 0.60 mg/cm$^2$, and the basis weight of polymer electrolyte was calculated to be 0.045 mg/cm$^2$. Since the ion-exchange capacity of polymer electrolyte 2 was 1.7 [meq/g], the sulfonic acid group density of the anode catalyst layer was calculated to be $\alpha = 0.035 \times 1.7 = 0.06$ [μeq/cm$^2$]. Also, since the ion-exchange capacity of polymer electrolyte 3 was 3.1 [meq/g], the sulfonic acid group density of the cathode catalyst layer was calculated to be $\beta = 0.045 \times 3.1 = 0.14$ [μeq/cm$^2$].

(Assembly and evaluation of fuel cell)

A commercially available JARI standard cell was used to produce a fuel cell. Specifically, on each of the outer sides of the obtained membrane-electrode assembly there were situated a gas diffusion layer, a gasket with a 210 μm thickness and a carbon separator with a gas channel groove cut therein, and a collector and an end plate were laminated in that order on the outer sides, and the stack was clamped with a bolt to assemble an evaluation fuel cell with an effective membrane area of 25 cm$^2$.

Each of the obtained fuel cells was kept at 80°C while supplying humidified hydrogen to the anode and humidified air to the cathode catalyst layer side. The back pressure at the gas outlet of the cell was adjusted to 0.1 MPaG. Each source gas was humidified by passing gas through a bubbler, with a water temperature of 45°C in the hydrogen bubbler and a water temperature of 55°C in the air bubbler. The hydrogen gas flow rate was 529 mL/min and the air gas flow rate was 1665 mL/min. The value of the current density was measured when the voltage reached 0.3 V, giving a value of 1.86 A/cm$^2$.

(Example 2)

(Preparation of catalyst ink 3)

Catalyst ink 3 was prepared in the same manner as catalyst ink 1, except that the amount of emulsion of polymer electrolyte 2 was 2.50 g, and the platinum-supporting carbon used had the platinum supported at 50.0 wt%.

(Preparation of catalyst ink 4)

Catalyst ink 4 was prepared in the same manner as catalyst ink 2, except that the amount of emulsion of polymer electrolyte 3 was 2.67 g, and the platinum-supporting carbon used had the platinum supported at 50.0 wt%.

(Fabrication of MEA)

Catalyst ink 3 was used to form an anode catalyst layer and catalyst layer ink 4 was used to form the cathode catalyst layer, and the basis weight of platinum in the anode catalyst layer was 0.60 $mg/cm^2$. An MEA was fabricated otherwise in the same manner as Example 1. The obtained MEA had values of 0.22 for $\alpha$ and 0.28 for $\beta$.

(Assembly and evaluation of fuel cell)

A fuel cell was assembled in the same manner as Example 1 except for using a 250 $\mu$m-thick gasket, and the value of the current density was measured when the voltage reached 0.3 V, giving a value of 1.20 $A/cm^2$.

(Example 3)

(Preparation of catalyst ink 5)

Catalyst ink 5 was prepared in the same manner as catalyst ink 1, except that the amount of emulsion of polymer electrolyte 2 was 5.00 g, and the platinum-supporting carbon used had the platinum supported at 50.0 wt%.

(Fabrication of MEA)

Catalyst ink 5 was used to form an anode catalyst layer, and the basis weight of platinum in the anode catalyst layer was 0.30 $mg/cm^2$. An MEA was fabricated otherwise in the same manner as Example 2. The obtained MEA had values of 0.22 for $\alpha$ and 0.28 for $\beta$.

(Assembly and evaluation of fuel cell)

A fuel cell was assembled in the same manner as Example 2, and the value of the current density was measured when the voltage reached 0.3 V, giving a value of 1.02 $A/cm^2$.

(Comparative Example 1)

(Preparation of catalyst ink 6)

Catalyst ink 6 was prepared in the same manner as catalyst ink 1, except that the amount of emulsion of polymer electrolyte 2 was 5.34 g, and the platinum-supporting carbon used had the platinum supported at 50.0 wt%.

(Fabrication of MEA)

A MEA was fabricated in the same manner as Example 2, except that catalyst ink 6 was used to form the anode catalyst layer. The obtained MEA had values of 0.48 for $\alpha$ and 0.28 for $\beta$.

(Assembly and evaluation of fuel cell)

A fuel cell was assembled in the same manner as Example 2, and the value of the current density was measured when the voltage reached 0.3 V, giving a value of 0.55 $A/cm^2$.

(Comparative Example 2)

(Preparation of catalyst ink 7)

Catalyst ink 7 was prepared in the same manner as catalyst ink 2, except that the amount of emulsion of polymer electrolyte 3 was 12.5 g, and the platinum-supporting carbon used had the platinum supported at 50.0 wt%.

(Fabrication of MEA)

A MEA was fabricated in the same manner as Example 2, except that catalyst ink 7 was used to form the cathode catalyst layer. The obtained MEA had values of 0.22 for $\alpha$ and 0.87 for $\beta$.

(Assembly and evaluation of fuel cell)

An evaluation fuel cell was assembled in the same manner as Example 2, and the value of the current density was measured when the voltage reached 0.3 V, giving a value of 0.77 A/$cm^2$.

(Example 4)

(Preparation of catalyst ink 8)

Into 2.49 g of an emulsion of polymer electrolyte P1 there was loaded 0.50 g of platinum-supporting carbon black (C1-70 by E-TEK), with platinum supported at 68.3 wt%, and then 21.83 g of ethanol and 3.23 g of water were added. The obtained mixture was subjected to ultrasonic treatment for 1 hour and then stirred for 6 hours with a stirrer to obtain catalyst ink 8.

(Preparation of catalyst ink 9)

Into 20.30 g of an emulsion of polymer electrolyte P1 there was loaded 0.50 g of platinum-supporting carbon black (SA50BK by N.E. Chemcat), with platinum supported at 51.0 wt%, and then 21.83 g of ethanol and 3.23 g of water were added. The obtained mixture was subj ected to ultrasonic treatment for 1 hour and then stirred for 6 hours with a stirrer to obtain catalyst ink 9.

(Fabrication of MEA)

Catalyst ink 8 was used to form an anode catalyst layer and catalyst layer ink 9 was used to form the cathode catalyst layer, with a basis weight of platinum in the anode catalyst layer of 0.16 mg/$cm^2$ and a basis weight of platinum in the cathode catalyst layer of 0.60 mg/$cm^2$. An MEA was fabricated otherwise in the same manner as Example 1. The obtained MEA had values of 0.019 for $\alpha$ and 0.77 for $\beta$.

(Assembly and evaluation of fuel cell)

A fuel cell was assembled in the same manner as Example 1 except for using a 180 $\mu$m-thick gasket, and the value of the current density was measured when the voltage reached 0.3 V, giving a value of 1.25 A/$cm^2$.

(Example 5)

(Preparation of catalyst ink 10)

Into 10.15 g of an emulsion of polymer electrolyte P1 there was loaded 0.50 g of platinum-supporting carbon black (SA50BK by N.E. Chemcat), with platinum supported at 51.0 wt%, and then 21.83 g of ethanol and 3.23 g of water were added. The obtained mixture was subj ected to ultrasonic treatment for 1 hour and then stirred for 6 hours with a stirrer to obtain catalyst ink 10.

(Preparation of catalyst ink 11)

Into 19.95 g of an emulsion of polymer electrolyte P1 there was loaded 0.50 g of platinum-supporting carbon black (SA50BK by N.E. Chemcat), with platinum supported at 51.0 wt%, and then 21.83 g of ethanol and 3.23 g of water were added. The obtained mixture was subjected to ultrasonic treatment for 1 hour and then stirred for 6 hours with a stirrer to obtain catalyst ink 11.

(Fabrication of MEA)

Catalyst ink 10 was used to form an anode catalyst layer and catalyst layer ink 11 was used to form the cathode catalyst layer, with a basis weight of platinum in the anode catalyst layer of 0.60 mg/$cm^2$ and a basis weight of platinum in the cathode catalyst layer of 0.60 mg/$cm^2$. An MEA was fabricated otherwise in the same manner as Example 1. The obtained MEA had values of 0.38 for $\alpha$ and 0.76 for $\beta$.

(Assembly and evaluation of fuel cell)

A fuel cell was assembled in the same manner as Example 1 except for using a 180 μm-thick gasket, and the value of the current density was measured when the voltage reached 0.3 V, giving a value of 1.32 A/$cm^2$.

(Example 6)

(Preparation of catalyst ink 12)

Into 30.80 g of an emulsion of polymer electrolyte P1 there was loaded 0.50 g of platinum-supporting carbon black (SA50BK by N.E. Chemcat), with platinum supported at 51.0 wt%, and then 21.83 g of ethanol and 3.23 g of water were added. The obtained mixture was subj ected to ultrasonic treatment for 1 hour and then stirred for 6 hours with a stirrer to obtain catalyst ink 12.

(Preparation of catalyst ink 13)

Into 11.20 g of an emulsion of polymer electrolyte P1 there was loaded 0.50 g of platinum-supporting carbon black (SA50BK by N.E. Chemcat), with platinum supported at 51.0 wt%, and then 21.83 g of ethanol and 3.23 g of water were added. The obtained mixture was subjected to ultrasonic treatment for 1 hour and then stirred for 6 hours with a stirrer to obtain catalyst ink 13.

(Fabrication of MEA)

Catalyst ink 12 was used to form an anode catalyst layer and catalyst layer ink 13 was used to form the cathode catalyst layer, with a basis weight of platinum in the anode catalyst layer of 0.20 mg/$cm^2$ and a basis weight of platinum in the cathode catalyst layer of 0.60 mg/$cm^2$. An MEA was fabricated otherwise in the same manner as Example 1. The obtained MEA had values of 0.39 for $\alpha$ and 0.42 for $\beta$.

(Assembly and evaluation of fuel cell)

A fuel cell was assembled in the same manner as Example 1 except for using a 210 μm-thick gasket, and the value of the current density was measured when the voltage reached 0.3 V, giving a value of 1.42 A/$cm^2$.

(Example 7)

(Preparation of catalyst ink 14)

Into 17.50 g of an emulsion of polymer electrolyte P1 there was loaded 0.50 g of platinum-supporting carbon black (SA50BK by N.E. Chemcat), with platinum supported at 51.0 wt%, and then 21.83 g of ethanol and 3.23 g of water were added. The obtained mixture was subjected to ultrasonic treatment for 1 hour and then stirred for 6 hours with a stirrer to obtain catalyst ink 14.

(Preparation of catalyst ink 15)

Into 20.30 g of an emulsion of polymer electrolyte P1 there was loaded 0.50 g of platinum-supporting carbon black (SA50BK by N.E. Chemcat), with platinum supported at 51.0 wt%, and then 21.83 g of ethanol and 3.23 g of water were added. The obtained mixture was subj ected to ultrasonic treatment for 1 hour and then stirred for 6 hours with a stirrer to obtain catalyst ink 15.

(Fabrication of MEA)

Catalyst ink 14 was used to form an anode catalyst layer and catalyst layer ink 15 was used to form the cathode catalyst layer, with a basis weight of platinum in the anode catalyst layer of 0.20 mg/$cm^2$ and a basis weight of platinum in the cathode catalyst layer of 0.60 mg/$cm^2$. An MEA was fabricated otherwise in the same manner as Example 1. The obtained MEA had values of 0.22 for $\alpha$ and 0.77 for $\beta$.

(Assembly and evaluation of fuel cell)

A fuel cell was assembled in the same manner as Example 1 except for using a 210 μm-thick gasket, and the value of the current density was measured when the voltage reached 0.3 V, giving a value of 1.49 A/$cm^2$.

(Example 8)

(Preparation of catalyst ink 16)

Into 9.42 g of an emulsion of polymer electrolyte 2 there was loaded 0.50 g of platinum-supporting carbon black, with platinum supported at 70.0 wt%, and then 21.83 g of ethanol and 3.23 g of water were added. The obtained mixture was subjected to ultrasonic treatment for 1 hour and then stirred for 6 hours with a stirrer to obtain catalyst ink 16.

(Preparation of catalyst ink 17)

Into 6.43 g of an emulsion of polymer electrolyte 3 there was loaded 0.50 g of platinum-supporting carbon powder, with platinum supported at 70.0 wt%, and then 28.19 g of ethanol and 4.17 g of water were added. The obtained mixture was subjected to ultrasonic treatment for 1 hour and then stirred for 6 hours with a stirrer to obtain catalyst ink 17.

(Fabrication of MEA)

Catalyst ink 16 was used to form an anode catalyst layer and catalyst layer ink 17 was used to form the cathode catalyst layer, with a basis weight of platinum in the anode catalyst layer of 0.16 mg/$cm^2$ and a basis weight of platinum in the cathode catalyst layer of 0.60 mg/$cm^2$. An MEA was fabricated otherwise in the same manner as Example 1. The obtained MEA had values of 0.069 for $\alpha$ and 0. 18 for $\beta$.

(Assembly and evaluation of fuel cell)

A fuel cell was assembled in the same manner as Example 1 except for using a 210 μm-thick gasket, and the value of the current density was measured when the voltage reached 0.3 V, giving a value of 1.73 A/$cm^2$.

(Comparative Example 3)

(Preparation of catalyst ink 18)

Into 12.25 g of an emulsion of polymer electrolyte P1 there was loaded 0.50 g of platinum-supporting carbon black (SA50BK by N.E. Chemcat), with platinum supported at 51.0 wt%, and then 21.83 g of ethanol and 3.23 g of water were added. The obtained mixture was subjected to ultrasonic treatment for 1 hour and then stirred for 6 hours with a stirrer to obtain catalyst ink 18.

(Preparation of catalyst ink 19)

Into 16.80 g of an emulsion of polymer electrolyte P1 there was loaded 0.50 g of platinum-supporting carbon black (SA50BK by N.E. Chemcat), with platinum supported at 51.0 wt%, and then 21.83 g of ethanol and 3.23 g of water were added. The obtained mixture was subjected to ultrasonic treatment for 1 hour and then stirred for 6 hours with a stirrer to obtain catalyst ink 19.

(Fabrication of MEA)

Catalyst ink 18 was used to form an anode catalyst layer and catalyst layer ink 19 was used to form the cathode catalyst layer, with a basis weight of platinum in the anode catalyst layer of 0.60 mg/$cm^2$ and a basis weight of platinum in the cathode catalyst layer of 0.60 mg/$cm^2$. An MEA was fabricated otherwise in the same manner as Example 1. The obtained MEA had values of 0.46 for $\alpha$ and 0.64 for $\beta$.

(Assembly and evaluation of fuel cell)

A fuel cell was assembled in the same manner as Example 1 except for using a 250 μm-thick gasket, and the value of the current density was measured when the voltage reached 0.3 V, giving a value of 0.86 A/$cm^2$.

(Comparative Example 4)

(Preparation of catalyst ink 20)

Into 5.25 g of an emulsion of polymer electrolyte P1 there was loaded 0.50 g of platinum-supporting carbon black (SA50BK by N.E. Chemcat), with platinum supported at 51.0 wt%, and then 21.83 g of ethanol and 3.23 g of water were added. The obtained mixture was subj ected to ultrasonic treatment for 1 hour and then stirred for 6 hours with a stirrer to obtain catalyst ink 20.

(Preparation of catalyst ink 21)

Into 3.40 g of an emulsion of polymer electrolyte P1 there was loaded 0.50 g of platinum-supporting carbon black (C1-70 by E-TEK), with platinum supported at 68.3 wt%, and then 21.83 g of ethanol and 3.23 g of water were added. The obtained mixture was subjected to ultrasonic treatment for 1 hour and then stirred for 6 hours with a stirrer to obtain catalyst ink 21.

(Fabrication of MEA)

Catalyst ink 20 was used to form an anode catalyst layer and catalyst layer ink 21 was used to form the cathode catalyst layer, with a basis weight of platinum in the anode catalyst layer of 0.60 mg/cm$^2$ and a basis weight of platinum in the cathode catalyst layer of 0.60 mg/cm$^2$. An MEA was fabricated otherwise in the same manner as Example 1. The obtained MEA had values of 0.20 for $\alpha$ and 0.096 for $\beta$.

(Assembly and evaluation of fuel cell)

A fuel cell was assembled in the same manner as Example 1 except for using a 250 $\mu$m-thick gasket, and the value of the current density was measured when the voltage reached 0.3 V, giving a value of 0.74 A/cm$^2$.

(Comparative Example 5)

(Preparation of catalyst ink 22)

Into 6.73 g of an emulsion of polymer electrolyte P1 there was loaded 0.50 g of platinum-supporting carbon black (C1-80 by E-TEK), with platinum supported at 78.6 wt%, and then 21.83 g of ethanol and 3.23 g of water were added. The obtained mixture was subjected to ultrasonic treatment for 1 hour and then stirred for 6 hours with a stirrer to obtain catalyst ink 22.

(Preparation of catalyst ink 23)

Into 22.75 g of an emulsion of polymer electrolyte P1 there was loaded 0.50 g of platinum-supporting carbon black (SA50BK by N.E. Chemcat), with platinum supported at 51.0 wt%, and then 21.83 g of ethanol and 3.23 g of water were added. The obtained mixture was subjected to ultrasonic treatment for 1 hour and then stirred for 6 hours with a stirrer to obtain catalyst ink 23.

(Fabrication of MEA)

Catalyst ink 22 was used to form an anode catalyst layer and catalyst layer ink 23 was used to form the cathode catalyst layer, with a basis weight of platinum in the anode catalyst layer of 0.16 mg/cm$^2$ and a basis weight of platinum in the cathode catalyst layer of 0.60 mg/cm$^2$. An MEA was fabricated otherwise in the same manner as Example 1. The obtained MEA had values of 0.044 for $\alpha$ and 0.86 for $\beta$.

(Assembly and evaluation of fuel cell)

A fuel cell was assembled in the same manner as Example 1 except for using a 250 $\mu$m-thick gasket, and the value of the current density was measured when the voltage reached 0.3 V, giving a value of 0.71 A/cm$^2$.

[Table 1]

| | $\alpha$ [$\mu$eq/cm$^2$] | $\beta$ [$\mu$eq/cm$^2$] | $\beta/\alpha$ | Electric power generation [A.cm$^2$]*1 |
|---|---|---|---|---|
| Example 1 | 0.06 | 0.14 | 2.3 | 1.86 |
| Example 2 | 0.22 | 0.28 | 1.3 | 1.20 |
| Example 3 | 0.22 | 0.28 | 1.3 | 1.02 |
| Example 4 | 0.019 | 0.77 | 40.5 | 1.25 |
| Example 5 | 0.38 | 0.76 | 2.0 | 1.32 |
| Example 6 | 0.39 | 0.42 | 1.1 | 1.42 |
| Example 7 | 0.22 | 0.77 | 3.5 | 1.49 |
| Example 8 | 0.069 | 0.18 | 2.6 | 1.73 |
| Comp. Ex. 1 | 0.48 | 0.28 | 0.58 | 0.55 |
| Comp. Ex. 2 | 0.22 | 0.87 | 4.0 | 0.77 |
| Comp. Ex. 3 | 0.46 | 0.64 | 1.4 | 0.86 |
| Comp. Ex. 4 | 0.20 | 0.096 | 0.48 | 0.74 |
| Comp. Ex. 5 | 0.044 | 0.86 | 19.5 | 0.71 |
| *1: Value at 0.3 V | | | | |

The evaluation results for the fuel cells are summarized in Table 1. As is clear from the results in Table 1, the fuel cells of the examples which satisfied $\beta/\alpha > 1.0$, $\alpha < 0.45$, $\beta < 0.85$ exhibited extremely high electric power generation performance compared to Comparative Examples 1-5 wherein $\alpha$ and $\beta$ did not simultaneously satisfy these conditions.

## Claims

1. A membrane-electrode assembly for a solid polymer fuel cell, comprising: an anode catalyst layer and cathode catalyst layer placed opposite each other; and a polymer electrolyte membrane formed between the anode catalyst layer and cathode catalyst layer, wherein
the polymer electrolyte membrane contains a hydrocarbon-based polymer electrolyte with an ion-exchange group,
the anode catalyst layer and cathode catalyst layer each contain a catalyst and a hydrocarbon-based polymer electrolyte with an ion-exchange group, and
when the ion-exchange group density of the anode catalyst layer is represented as $\alpha$ [$\mu$eq/cm$^2$] and the ion-exchange group density of the cathode catalyst layer is represented as $\beta$ [$\mu$eq/cm$^2$], then $\alpha$ and $\beta$ satisfy the following relational expressions (1), (2) and (3).

$$\beta/\alpha > 1.0 \quad \ldots (1)$$

$$\alpha < 0.45 \quad \ldots (2)$$

$$\beta < 0.85 \quad \ldots (3)$$

2. A membrane-electrode assembly according to claim 1, wherein the hydrocarbon-based polymer electrolyte in the polymer electrolyte membrane is a block copolymer comprising a first block composed of a repeating unit with an ion-exchange group, and a second block composed essentially of a repeating unit with no ion-exchange group.

3. A method for production of a membrane-electrode assembly according to claim 1 or 2,
the production method comprising a step of forming an anode catalyst layer and/or cathode catalyst layer using catalyst ink containing a solvent selected from among water and hydrophilic solvents, a catalyst substance and a hydrocarbon-based polymer electrolyte, wherein at least a portion of the hydrocarbon-based polymer electrolyte is dispersed in the solvent.

4. A production method according to claim 3, wherein in the step of forming the anode catalyst layer and/or cathode catalyst layer, the anode catalyst layer and/or cathode catalyst layer is formed by a method of directly coating the catalyst ink onto the polymer electrolyte membrane by spraying and removing the solvent from the coated catalyst ink.

5. A solid polymer fuel cell comprising a membrane-electrode assembly according to claim 1 or 2.

Fig.1

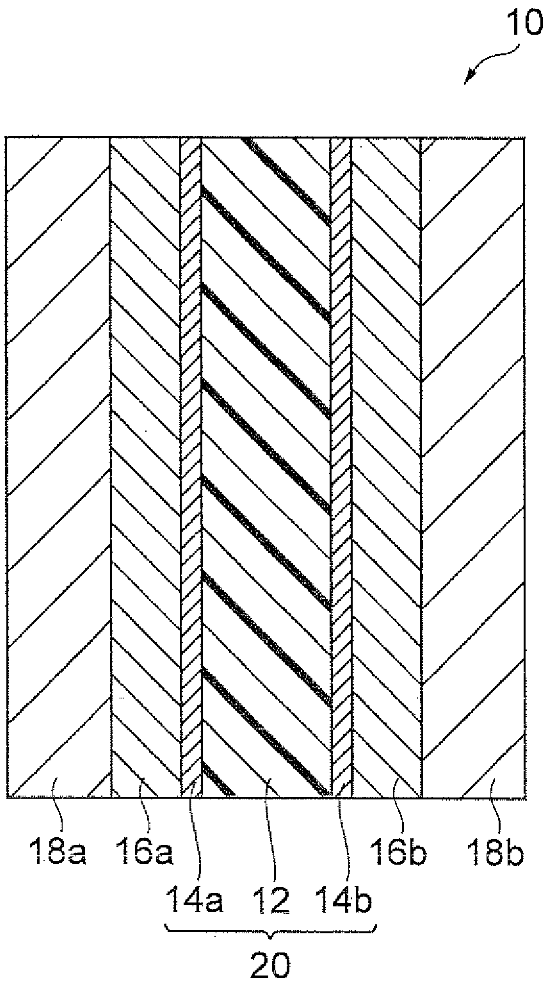

**INTERNATIONAL SEARCH REPORT**

International application No.
PCT/JP2008/060895

A. CLASSIFICATION OF SUBJECT MATTER
*H01M8/02*(2006.01)i, *H01M4/86*(2006.01)i, *H01M4/88*(2006.01)i, *H01M8/10*(2006.01)i

According to International Patent Classification (IPC) or to both national classification and IPC

B. FIELDS SEARCHED

Minimum documentation searched (classification system followed by classification symbols)
H01M8/02, H01M4/86, H01M4/88, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2007-026819 A (JSR Corp.),<br>01 February, 2007 (01.02.07),<br>Claims; Par. Nos. [0001], [0126] to [0141]<br>& US 2007/0015041 A1 | 1,5<br>2-4 |
| A | JP 2007-149592 A (Toyobo Co., Ltd.),<br>14 June, 2007 (14.06.07),<br>Full text<br>(Family: none) | 1-5 |
| A | JP 2001-338654 A (Asahi Glass Co., Ltd.),<br>07 December, 2001 (07.12.01),<br>Full text<br>(Family: none) | 1-5 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>24 July, 2008 (24.07.08) | Date of mailing of the international search report<br>05 August, 2008 (05.08.08) |
| Name and mailing address of the ISA/<br>Japanese Patent Office<br>Facsimile No. | Authorized officer<br><br>Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3689322 B
- JP 2003282096 A
- JP 9110982 A
- JP 11011679 A
- JP 11503262 A
- JP 2005126684 A
- JP 2005139432 A
- WO 200695919 A
- JP 2004089976 A


### Non-patent literature cited in the description


- Fuel Cells and Polymers. Kyoritsu Publishing, 10 November 2005, 103-112
- *J. Appl. Polym. Sci.,* 1974, vol. 18, 1969